# EUROPEAN PATENT SPECIFICATION

(11) **EP 4 153 686 B1**
(45) Date of publication and mention of the grant of the patent: **31.07.2024**
(21) Application number: 21723761.9
(22) Date of filing: 11.05.2021
(51) Int. Cl.: C09D 5/00

(54) **THERMOSET POLYMER POWDER**
POUDRE POLYMÈRE THERMODURCISSABLE
WÄRMEHÄRTBARES POLYMERPULVER

(30) Priority: 19.05.2020 EP 20175556
(43) Date of publication of application: 29.03.2023
(73) Proprietor: BYK-Chemie GmbH, 46483 Wesel (DE)
(72) Inventor: NOLTE, Ulrich, 46483 Wesel (DE); QUICKERT, Erik, 46483 Wesel (DE); KNIESBURGES, Rainer, 46483 Wesel (DE); BERKEI, Michael, 46483 Wesel (DE); ZÜHLKE, Julia Katharina, 46483 Wesel (DE)
(74) Representative: Altana IP Department
(86) International application number: PCT/EP2021/062406
(87) International publication number: WO 2021/233728

(56) References cited:
- WO-A1-2014/081004
- WO-A1-2014/199728
- WO-A1-2015/083576
- JP-A- S5 128 828

## Description

The invention relates to a thermoset polymer powder having a particle size D90 of 60 µm or less, to a process of preparing the polymer powder, and to the use of the polymer powder.

Thermoset polymer powders suitable as matting agents for coatings are commercially available, for example under the trademark Deuteron^{®}. These materials are urea formaldehyde condensation products. Due to their moisture content of 10 to 12 %, these polymer powders are not suitable for moisture curable systems. Under certain conditions, urea formaldehyde condensation products may release formaldehyde. This is undesirable from an industrial hygiene perspective.

It is also known to use waxes, for example synthetic polyethylene wax particles, as matting agents for coatings. A drawback of the use of waxes as matting agent is their tendency to increase the gloss of the coating after mechanical stress, such as rubbing of the coated surface.

Furthermore, inorganic particles based on silicon dioxide are used as matting agents in coating compositions. Inorganic particles based on silicon dioxide generally have a higher density than organic particles. Including higher density particles to coating compositions is sometimes undesirable. Moreover, silicon dioxide particles have a significant influence on the viscosity of liquid compositions. This limits the degree of freedom in formulating coatings with matting agents based on silicon dioxide particles.

WO 2014/081004 A relates to a radiation-curable composition for soft-feel coatings. The composition comprises a urethane (meth)acrylate as resin, and a fine particle synthetic resin filler. The fine particle synthetic resin filler can be a nylon filler, a polyurethane filler, a polyurea filler, a polyolefin resin filler, such as polyethylene or polypropylene filler, a poly(meth)acryl filler, or a polystyrene filler. The filler is of substantially spherical shape.

WO 2014/199728 A relates to an epoxy resin composition for optical semiconductor reflectors. The composition comprises a thermosetting resin, a white pigment, and an inorganic filler.

WO 2015/083576 A relates to a thermosetting resin composition for optical semiconductor devices used as the forming material of a reflector. The composition comprises a thermosetting resin and a white pigment which consists only of zirconium oxides. In some embodiments, an inorganic filler is used.

JP 51028828 A relates to thermosetting resin compositions for powder paint. The compositions comprise polyvalent carboxyl compounds and branched vinyl type polymers having softening points of 70 to 150 degrees C and molecular weights of 3000 to 30000 g/mol.

In view of the above, there is a need for particles suitable as matting agents alleviating or avoiding the above-mentioned drawbacks.

The invention provides a thermoset polymer powder having a particle size D90 of 60 µm or less, preferably 50 µm or less, determined by laser diffraction, wherein the polymer is obtainable by polymerization of compounds having one or more ethylenically unsaturated polymerizable groups, and wherein the compounds having one or more ethylenically unsaturated polymerizable groups include at least one compound having at least two ethylenically unsaturated polymerizable groups.

The thermoset polymer powder of the invention contains no known sources of formaldehyde and does not release formaldehyde under normal conditions. It is suitable as additive for aqueous and non-aqueous compositions. It can also be used in moisture-curable compositions. When used as matting agent in a coating, there is no or little increase of gloss upon rubbing. The thermoset polymer particles have a lower density than silicon dioxide and less influence on the viscosity of liquid compositions than silicon dioxide.

Thermoset polymer particles are crosslinked. This means that they contain a three-dimensional network of chemical bonds. Thermoset polymer particles cannot be melted without decomposition.

As mentioned above, the polymer is obtainable by polymerization of compounds having one or more ethylenically unsaturated polymerizable groups. In a preferred embodiment, the compounds having at least two ethylenically unsaturated polymerizable groups comprise a compound having three ethylenically unsaturated polymerizable groups.

It is also preferred that the compounds having at least two ethylenically unsaturated polymerizable groups have an ethylenically unsaturated polymerizable group equivalent weight in the range of 85 g/equivalent to 180 g/equivalent. In a highly preferred embodiment, at least 60 weight-% of the polymer consists of polymerized compounds having at least two ethylenically unsaturated polymerizable groups have an ethylenically unsaturated polymerizable group equivalent weight in the range of 85 g/equivalent to 180 g/equivalent.

Examples of suitable compounds having one or more ethylenically unsaturated polymerizable groups include ethyleneglycol di(meth)acrylate, 1,2-propanediol di(meth)acrylate, 1,3-propanediol di(meth)acrylate, 1,4-butanediol di(meth)acrylate, 1,6-hexanediol di(meth)acrylate, diethylenglycol di(meth)acrylate, triethylenglycol di(meth)acrylate, dipropyleneglycol di(meth)acrylate, tripropylene glycol di(meth)acrylate, trimethylol propane tri(meth)acrylate, pentaerythritol tri(meth)acrylate, pentaerythritol tetra (meth)acrylate, and mixtures thereof mixtures.

Examples of compounds having one ethylenically unsaturated polymerizable group include styrene and esters of acrylic and methacrylic acid, and amides of acrylic and methacrylic acid.

Examples for such monomers are:
(i) (meth)acrylic esters of straight-chain, branched or cycloaliphatic alcohols having 1 to 22, preferably 1 to 12, more preferably 1 to 8 and most preferably 1 to 6 carbon atoms, such as methyl (meth)acrylate, ethyl (meth)acrylate, n-butyl (meth)acrylate, tert-butyl (meth)acrylate, n-hexyl (meth)acrylate, isobutyl (meth)acrylate, isopentyl (meth)acrylate, lauryl (meth)acrylate, 2-ethylhexyl (meth)acrylate, stearyl (meth)acrylate, cyclohexyl (meth)acrylate, behenyl (meth)acrylate, isodecyl (meth)acrylate, 2-propylheptyl (meth)acrylate, 3,5,5-trimethyl-1-hexyl (meth)acrylate, nonanyl (meth)acrylate, 2-propylheptyl (meth)acrylate, 2-isopropyl-5-methylhexyl (meth)acrylate, tridecyl (meth)acrylate, heptadecyl (meth)acrylate, heneicosanyl (meth)acrylate and isobornyl (meth)acrylate; and (meth)acrylic ester having dicyclopentadienyl functionality, such as dicyclopentenyl oxyethyl acrylate or methacrylate.
(ii) aryl (meth)acrylic esters whose aryl ring, without possible additional substituents, contains 5 to 12, preferably 6 to 10, carbon atoms, such as phenyl acrylate; and aralkyl (meth)acrylic esters whose aralkyl radical, without possible additional substituents on the aryl radical, contains 6 to 11, preferably 7 to 11, carbon atoms, such as benzyl methacrylate, it being possible for the aryl radicals of the aryl (meth)acrylic esters and of the aralkyl (meth)acrylic esters in each case to be unsubstituted or to be substituted up to four times, such as, for example, 4-methylphenyl methacrylate.

The expression (meth)acrylate represents acrylate or methacrylate.

In a further embodiment, the compounds having at least two ethylenically unsaturated polymerizable groups are unsaturated polyesters, in particular polyesters wherein the unsaturated is based on esterified units of maleic acid. Such unsaturated polyesters are commercially available and are often used in combination with reactive diluents, such as styrene, the (meth)acrylic monomers mentioned above, or vinyl esters.

Typically, these unsaturated polyesters are the product of unsaturated mono- or dibasic acids with difunctional alcohols used in the manufacture of the aforementioned unsaturated polyester. Suitable examples of α,β-unsaturated dibasic acids are maleic acid, maleic anhydride, fumaric acid, itaconic acid and itaconic anhydride.

Suitable dibasic acids are phthalic acid, phthalic anhydride, halogenated phthalic anhydride, isophthalic acid, terephthalic acid, tetrahydrophthalic acid, tetrahydrophthalic anhydride, hexahydrophthalic acid, hexahydrophthalic anhydride, hexahydroterephthalic acid, hexahydroisophthalic acid, succinic acid, malonic acid, glutaric acid, adipic acid, sebacic acid, 1,12-dodecane dicarboxylic acid, 2,6-naphthalene dicarboxylic acid, 2,7-naphthalene dicarboxylic acid, 2,3-naphthalene dicarboxylic acid, 2,3-naphthalene dicarboxylic acid anhydride, 4,4'-biphenyldicarboxylic acid, as well as dialkylesters of the aforementioned, and the like.

Suitable monobasic acids include benzoic acid, stearic acid, oleic acid, linolenic acid, linoleic acid, palmitic acid and the like, including combinations thereof.

Examples for suitable multifunctional alcohols are polyhydric alcohols which include, for example, ethylene glycol, diethylene glycol, triethylene glycol, polyethylene glycol, propylene glycol, dipropylene glycol, polypropylene glycol, 2-methyl-1 ,3-propane diol, 1,3-butane diol, neopentylglycol, bisphenol A hydroxide, 1 ,4-butane diol, adduct of bisphenol A and propylene oxide or ethylene oxide, 1,2,3,4-tetrahydroxybutane, glycerin, trimethylol propane, 1,3-propane diol, 1,2-cyclohexane glycol, 1,3-cyclohexane glycol, 1,4-cyclohexane glycol, 1,4-cyclohexane dimethanol, paraxylene glycol, dicyclohexyl-4, 4'-diol, 2,6-decalin glycol, 2,7-decalin glycol, and mixtures thereof. Monohydric alcohols include benzyl alcohol, hydroxy(dicyclopentadiene), cyclohexyl alcohol, 2-ethylhexyl alcohol, lauryl alcohol, stearyl alcohol, and mixtures thereof

In a preferred embodiment, the particle size D90 of the polymer powder is in the range of 10 to 40 µm, determined by laser diffraction.

The particle size can suitably be determined by measurements based on the principle of laser diffraction using a Sympatec Helos apparatus according to ISO 13220-1. The measurements are suitably carried out using a Rodos dry dispersing unit of Sympatec GmbH, using the lens unit R4, using the Software Windox 5.7.1.0, and using the Fraunhofer theory. Particle size distributions determined by laser diffraction refer to the particle volume distribution.

Generally, the surface of the particles has one or more edges. These edges are created when the particles are formed, for example in an extruder, or during subsequent particle size reduction processes. The edges are therefore called break edges. It believed that the presence of break edges on the surface of the particles improves the matting effect in coatings.

In a further embodiment, the surface of the polymer powder particles is at least partly covered with a surfactant. The surfactant facilitates keeping the polymer particles in a dispersed state in liquid formulations. Suitable surfactants are ionic or non-ionic surfactants. Examples of suitable surfactants include polymeric and non-polymeric surfactants. Suitable polymeric surfactants are also known as dispersing agents. Such dispersing agents are commercially available under the trade designation Disperbyk^{®} from BYK-Chemie GmbH. So far, very good results have been obtained with the sodium or potassium salt of a copolymer of acrylic acid, styrene, and alphamethylstyrene. Likewise, ethoxylated castor oil fatty acids performed very well, too.

If so desired, mixtures of surfactants may be used.

The amount of surfactant, if present, is suitably in the range of 0.5 to 10.0 % by weight, preferably 0.8 to 8.0 % by weight, calculated on the weight of the polymer powder particles.

The surfactant may be applied to the polymer particles during preparation in an extruder directly after formation of the particles, provided that the temperature is below the decomposition temperature of the surfactant. Alternatively, the surfactant may be applied to the polymer particles in a separate step, for example in a mechanical mixing apparatus. Suitably, a liquid surfactant or a surfactant solution is added to the polymer particles under mechanical mixing.

In a still further embodiment, the surfactant may be added to the feed material of the polymerization reactor. In this case, surfactant may be present on the surface of the polymer particles as well as in the polymer particles. In some embodiments, the surfactant may be covalently linked to the polymer of the particles by grafting processes.

The polymer powder of the invention is obtainable by a process comprising the steps of
a) Introducing into the inlet of a reactor comprising an inlet, an outlet, and a reaction zone, a feed material comprising compounds having one or more ethylenically unsaturated polymerizable groups, and wherein the compounds having one or more ethylenically unsaturated polymerizable groups include at least one compound having at least two ethylenically unsaturated polymerizable groups,
b) Exerting shear force on the material in the reaction zone of the reactor and causing the ethylenically unsaturated polymerizable groups to polymerize to form a thermoset polymer,
c) Crushing the thermoset polymer to form particles and moving the thermoset polymer particles through the outlet of the reactor.

Therefore, the invention also relates to a process of preparing a thermoset polymer powder comprising the steps of
a) Introducing into the inlet of a reactor comprising an inlet, an outlet, and a reaction zone, a feed material comprising compounds having one or more ethylenically unsaturated polymerizable groups, and wherein the compounds having one or more ethylenically unsaturated polymerizable groups include at least one compound having at least two ethylenically unsaturated polymerizable groups,
b) Exerting shear force on the material in the reaction zone of the reactor and causing the ethylenically unsaturated polymerizable groups to polymerize to form a thermoset polymer, and
c) Crushing the thermoset polymer to form particles and moving the thermoset polymer particles through the outlet of the reactor.

The feed material is generally a liquid and can be introduced into the reactor through the inlet by pumping or other suitable means of continuous dosing. In the reaction zone shear force is exerted to the material in the reaction zone. Generally, the shear force is exerted by mechanical means, such as stirrers, screws, or blades. The shear force causes mixing of the material in the reaction zone and a movement of the material from the inlet of the reactor towards the outlet of the reactor.

The ethylenically unsaturated polymerizable groups present in the material are caused to polymerize in the reaction zone of the reactor. The polymerization is generally initiated by energy introduced in the material present in the reaction zone.

Suitably, in step b) and/or step c) energy is introduced in the reaction mixture. In typical embodiments, the energy is introduced in the form of thermal energy, mechanical energy, actinic radiation, ultrasound, or combinations thereof. When the energy is introduced in the form of thermal energy, the temperature in the reaction zone is generally in the range of 100 to 200 °C, preferably 120 to 180 °C. Actinic radiation is electromagnetic radiation capable of initiating chemical reactions. Typical examples of actinic radiation are ultraviolet radiation and electron beam radiation.

The process of the invention can be carried out in any suitable reactor, for example in a kneader or in an extruder. In preferred embodiments, the process is carried out in an extruder. Examples of suitable extruders are single screw extruders, twin screw extruders, and planetary roller extruders. So far, very good results have been obtained with reactors, which allow for an improved control of the temperature in the reaction zone. This can lead to lower color of the polymer powder and a lower content of residual monomers.

In a preferred embodiment, the process is implemented as a continuous process. A continuous process is defined as a process wherein between a startup phase and a termination phase the weight of material introduced into the reactor per unit of time is equal to the weight of material leaving the reactor through the outlet in the same period of time.

Generally, the feed material is a liquid. Preferably, the feed material contains a low content of water and/or volatile organic solvent having a boiling point below 250°C at atmospheric pressure, or the feed material is free or essentially free of water and volatile organic solvent. Suitably, the combined content of water and volatile organic solvent is between 0.0 and 5.0 % by weight, calculated on the weight of the feed material introduced in the reactor.

In some embodiments, a radical generating initiator is introduced into the reaction zone. The radical generating initiator may be pre-mixed with the feed material. Alternatively, the radical generating initiator may be introduced in the reactor via a second inlet as separate feed stream either as a solution or undiluted. Examples of suitable radical generating initiators are organic peroxides and azo compounds.

Specific examples include diacylperoxide, 1,1-di-(tert-butylperoxy)-3,3,5-trimethylcyclohexane, 2,2'-azodi(2-methylbutyronitrile, 2,2'-azodi(isobutyronitrile), tert-butyl peroxy-2-ethylhexanoate, and di-tert-butyl peroxide. It is also possible to use mixtures of radical generating initiators. In some embodiments, using two different radical generating initiators having different decomposition rates can lead to a more complete monomer conversion.

In some embodiments, a peroxide decomposition catalyst may be included in the feed stream. Examples of such catalysts include metal compounds, for example based on copper, manganese, iron or cobalt.

In some embodiments, the process of the invention further comprises a cooling step wherein the thermoset polymer is cooled after leaving the outlet of the reactor. The thermoset polymer suitably is cooled to room temperature or to a temperature in the range of 15 to 55 °C.

Step c) of the process includes the step crushing the thermoset polymer to form particles and moving the thermoset polymer particles through the outlet of the reactor.

In some embodiments, the crushing step leads to particles having the desired particle size as described above. In other embodiments, it may be desired or required to bring the particles leaving the reactor further to a desired particle size. Therefore, the process sometimes comprises the step of milling the polymer particles to a desired particle size. Milling is preferably carried out by jet-milling. A jet-mill grinds materials by using a high-speed jet of compressed air or inert gas to impact particles into each other. Jet-mills can be designed to output particles below a certain size while continuing to mill particles above that size, resulting in a narrow size distribution of the resulting product. Particles leaving the mill can be separated from the gas stream by cyclonic separation.

In a still further embodiment, the process of the invention comprises the step of fractioning the polymer particles to a desired particle size range. Fractioning to a desired particles size range may be done by sieving process.

In some embodiments of the process, fractioning of the polymer particles to a desired particle size generates a particle size fraction which is below the desired particle size range. Such low size particle fractions may be included in the feed stream of the reactor in step a) of the process and be subjected to a further polymerization cycle. In some embodiments, the too small particles may grow to a desired particle size during the further polymerization cycle.

The invention further relates to the use of the thermoset polymer powder according to the invention as a functional additive, wherein the function of the additive comprises at least one of filler, modifier of tactile surface properties, matting agent, opacifying agent, and improver of mechanical properties.

The polymer powder of the invention can be used as additive in a variety of compositions, such as a coating composition, a plastic formulation, a pigment paste, a polymer formulation, a sealant formulation, a cosmetic formulation, a homecare or industrial care formulation (including perfume and fragrance formulations), a ceramic formulation, a flooring formulation, an adhesive formulation, a liquid formulation for use in gas and oil production, a composition for the manufacture of electrical components and circuits, a liquid formulation for use in energy storage media, a cleaning agent, a potting compound, a building material formulation, a lubricant, a filling compound, a wax emulsion, a metalworking fluid, a metal-processing product, a liquid composition in the form of a spraying agent, a so-called deposition aid (e.g., for use in plant protection agents or for the general purpose of drift reduction), an ink, and mixtures thereof.

It is preferred that the polymer powder is used as an additive for coating compositions, organic polymers, or cellulose based materials.

Examples of coating compositions include solvent-based, water-based or solvent-free paints, such as marine and protective coatings, automotive coatings, general industrial coatings, can and coil coatings, powder coatings, printing inks and inks and lacquers as e.g. lacquers for varnishing of plastics, wire enamels, floor coatings, and coating compositions for coating foodstuffs and seeds.

Examples of organic polymers include saturated and unsaturated polyesters, prepolymers, curable organic compositions, polyolefins, such as polyethylene and polypropylene, polyvinyl chloride, polystyrene, epoxide polymers, polyurethanes, polyamides, polyacrylates, polycarbonates, as well as mixtures and hybrids thereof.

Examples of cellulose based materials include paper, card board, fiber-boards, and wood-containing composite materials.

The use can also be described as a process of improving the properties of a composition, comprising the step of adding the thermoset polymer powder according to the invention to a composition, wherein the polymer acts as at least one of filler, modifier of tactile surface properties, matting agent, opacifying agent, and improver of mechanical properties.

### Examples

### Preparation Examples 1 to 5

A 250 g mixture, containing one or more monomers with one or more initiators according to Table 1 was provided at ambient temperature. In the Tables, the abbreviation pbw stands for "parts by weight".

**Table 1: compositional information of used monomer(s) and initiator combinations for examples 1 to 5**

| Example | Monomer(s) | pbw | Initiator(s) | pbw | Catalyst | pbw |
|---|---|---|---|---|---|---|
| 1.1 | Tripropylene Glycol Diacrylate | 98.90 | Tert-butyl peroxy-2-ethylhexanoate | 1.10 | | |
| 2.1 | 2,2-Bis[(acryloyloxy)methyl]butyl acrylate | 99.80 | 2,2'-Azodi (2-methylbutyronitril e) | 0.20 | | |
| 3.1 | 2,2-Bis[(acryloyloxy)methyl]butyl acrylate / Tripropylene Glycol Diacrylate | 75.00 / 24.80 | 2,2'-Azodi (2-methylbutyronitril e) | 0.20 | | |
| 4.1 | 1,4 Butanediol-dimethacrylate | 98.90 | Tert-butyl peroxy-2-ethylhexanoate | 1.10 | | |
| 5.1 | Unsaturated Polyester based on orthophthalic acid and standard glycols / Styrene / MMA | 57.84 / 31.15 / 9.89 | Tert-Butyl peroxy-2-ethylhexanoate / Di-tert-butyl peroxide | 0.92 / 0.18 | Copper Siccative 8% Cu | 0.02 |

### Each reactive mixture according to

Table 1 was pumped into a laboratory twin-screw extruder (model Prism TSE 16 PC, barrel bore diameter (D) 16 mm, screw diameter 15.5 mm, ratio of barrel length LID 14/1). The speed of the extruder as well as other parameters and settings are shown in
Table 2.

**Table 2: Settings of the used reaction extruder during the formation of materials according to examples 1 to 5**

| Example | Rotational speed [rpm] | Temperature [°C] | Throughput [g/ min] |
|---|---|---|---|
| 1.2 | 100 | 150 | 4.3 |
| 2.2 | 200 | 120 | 10.0 |
| 3.2 | 200 | 130-160 | 10.0 |
| 4.2 | 100 | 150 | 4.0 |
| 5.2 | 50 | 130 | 12.0 |

After 1 to 10 minutes of extrusion the output collection at the extruder outlet started. The collection of the extrusion outlet ended as soon as the dosing of liquid mixture to the extruder was finished. By this process it was ensured that the extrusion process ran in stationary condition and the resulting output had a constant quality.

All five output materials were white to off-white free flowing powders. Particle size measurements based on the principle of laser diffraction using a Sympatec Helos apparatus according to ISO 13220-1 are summarized in Table 3.

**Table 3: particle size distribution of examples 1 to 5 as received after extrusion process**

| Example | D10 [µm] | D50 [µm] | D90 [µm] | Color |
|---|---|---|---|---|
| 1.3 | 20.85 | 85.40 | 214.69 | White to off white |
| 2.3 | 20.86 | 157.13 | 318.17 | White to off white |
| 3.3 | | | | White to off white |
| 4.3 | 18.79 | 164.54 | 318.43 | White to off white |
| 5.3 | | 23.90 | 120.62 | White to off white |

To make the five materials more suitable for the application area in coatings each of them were milled in a jet-mill, Type AFG of Hosokawa Alpine AG.

After jet-mill processing the particle size distribution was substantially smaller, as measured by laser diffraction using the Sympatec Helos. An overview of the particle size distribution after jet-milling is provided in Table 4.

**Table 4: particle size distribution of examples 1 to 5 after jet milling**

| Example | D10 [µm] | D50 [µm] | D90 [µm] | Color |
|---|---|---|---|---|
| 1.4 | 2.56 | 10.74 | 20.50 | White to off white |
| 2.4 | 1.53 | 9.03 | 16.97 | White to off white |
| 3.4 | 1.35 | 7.91 | 16.18 | White to off white |
| 4.4 | 1.66 | 10.17 | 18.00 | White to off white |
| 5.4 | | 6.84 | 15.55 | White to off white |

In the next step the materials from examples 1 to 5 were transferred to an application test.

400 g of the coating test system were prepared by mixing the components according to Table 5 with a Dissolver mixing aggregate for 10 min at 4 m/ s speed.

**Table 5: Coating composition**

| Component | pbw |
|---|---|
| Setaqua 6756¹ | 91.60 |
| RHEOBYK-H 7625 VF² | 0.10 |
| Butyl Diglycol | 1.60 |
| Butyl Glycol | 1.60 |
| Water | 3.40 |
| RHEOBYK-T 1000 VF² | 1.00 |
| BYK-093² | 0.50 |
| BYK-349² | 0.20 |

| | |
|---|---|
| ¹ available from Allnex Germany GmbH ² available from BYK Chemie GmbH | |

In 50 g of the coating system according to Table 5 we added 2,5 g of powder from the examples 1 to 5 according to Table 4 and mixed with a Dissolver mixing aggregate at 4 m/ s for 5 minutes.

After 1 day at room temperature the liquid coating systems according to examples 1 to 5 plus a comparative coating composition without any powder according to this invention were applied in a wet layer thickness of 100 µm onto black plexi-glass panels for gloss measurement, and on glass panels for transmission measurement.

After 1 day of drying at ambient conditions the gloss was measured with BYK-Gardner Gloss measurement device micro-TRI-gloss µ.

The coatings on glass panels were measured with BYK-Gardner haze-gard i to get information about light transmission T. The light transmission T is indicated in % of the quantity of light transmitted through the coating.

All measurements were done in comparison to a control sample. The results are summarized in Table 6.

**Table 6: gloss and transmission measurement results from coating systems comprising powders according to examples 1 to 5 in comparison to control sample**

| Example | Gloss (20°) | Gloss (65°) | Gloss (80°) | T (%) |
|---|---|---|---|---|
| Control | 81 | 86 | 97 | 94 |
| 1.5 | 3 | 17 | 21 | 93 |
| 2.5 | 2 | 14 | 17 | 92 |
| 3.5 | 2 | 13 | 17 | 91 |
| 4.5 | 2 | 12 | 14 | 92 |
| 5.5 | 2 | 14 | 26 | |

The results in Table 6 indicate that the polymer powder of the invention significantly reduces the gloss of the tested coating composition. The gloss reduction is observed at various measurement angles. The polymer powder only causes a very small decrease of the light transmission. Therefore, the polymer powder is highly suitable as matting agent.

## Claims

1. A thermoset polymer powder having a particle size D90 of 60 µm or less, preferably 50 µm or less, determined by laser diffraction, wherein the polymer is obtainable by polymerization of compounds having one or more ethylenically unsaturated polymerizable groups, and wherein the compounds having one or more ethylenically unsaturated polymerizable groups include at least one compound having at least two ethylenically unsaturated polymerizable groups.

2. The polymer powder according to claim 1, wherein the compounds having at least two ethylenically unsaturated polymerizable groups comprise a compound having three ethylenically unsaturated polymerizable groups.

3. The polymer powder according to claim 1 or 2, wherein the compounds having at least two ethylenically unsaturated polymerizable groups have an ethylenically unsaturated polymerizable group equivalent weight in the range of 85 g/equivalent to 180 g/equivalent.

4. The polymer powder according to any one of the preceding claims, wherein at least 60 weight-% of the polymer consists of polymerized compounds having at least two ethylenically unsaturated polymerizable groups have an ethylenically unsaturated polymerizable group equivalent weight in the range of 85 g/equivalent to 180 g/equivalent.

5. The polymer powder according to any one of the preceding claims, wherein the particles have break edges.

6. The polymer powder according to any one of the preceding claims, wherein the surface of the polymer powder particles is at least partly covered with a surfactant.

7. A process of preparing the thermoset polymer powder according to any one of the preceding claims, comprising the steps of
a) Introducing into the inlet of a reactor comprising an inlet, an outlet, and a reaction zone, a feed material comprising compounds having one or more ethylenically unsaturated polymerizable groups, and wherein the compounds having one or more ethylenically unsaturated polymerizable groups include at least one compound having at least two ethylenically unsaturated polymerizable groups,
b) Exerting shear force on the material in the reaction zone of the reactor and causing the ethylenically unsaturated polymerizable groups to polymerize to form a thermoset polymer, and
c) Crushing the thermoset polymer to form particles and moving the thermoset polymer particles through the outlet of the reactor.

8. The process according to claim 7, wherein the process is implemented in an extruder.

9. The process according to claim 7 or 8, further comprising the step of milling the polymer particles to a desired particle size.

10. The process according to claim 9, wherein milling is implemented by jet-milling.

11. The process according to any one of the preceding claims 7 to 10, wherein a radical generating initiator is introduced into the reaction zone.

12. The process according to any one of the preceding claims 7 to 11, further comprising a cooling step wherein the thermoset polymer is cooled after leaving the outlet of the reactor.

13. Use of the thermoset polymer powder according to any one of the preceding claims 1 to 6 as a functional additive, wherein the function of the additive comprises at least one of filler, modifier of tactile surface properties, matting agent, opacifying agent, and improver of mechanical properties.

14. The use according to claim 13, wherein the polymer powder is used as an additive for coating compositions, organic polymers, or cellulose based materials.

## Patentansprüche

1. Duroplastisches Polymerpulver mit einer Teilchengröße D90 von 60 µm oder weniger, vorzugsweise 50 µm oder weniger, bestimmt durch Laserbeugung, wobei das Polymer durch Polymerisation von Verbindungen mit einer oder mehreren ethylenisch ungesättigten polymerisierbaren Gruppen erhältlich ist, und wobei die Verbindungen mit einer oder mehreren ethylenisch ungesättigten polymerisierbaren Gruppen mindestens eine Verbindung mit mindestens zwei ethylenisch ungesättigten polymerisierbaren Gruppen umfassen.

2. Polymerpulver nach Anspruch 1, wobei die Verbindungen mit mindestens zwei ethylenisch ungesättigten polymerisierbaren Gruppen eine Verbindung mit drei ethylenisch ungesättigten polymerisierbaren Gruppen umfassen.

3. Polymerpulver nach Anspruch 1 oder 2, wobei die Verbindungen mit mindestens zwei ethylenisch ungesättigten polymerisierbaren Gruppen ein ethylenisch ungesättigtes polymerisierbares Gruppenäquivalentgewicht im Bereich von 85 g/Äquivalent bis 180 g/Äquivalent aufweisen.

4. Polymerpulver nach einem der vorhergehenden Ansprüche, wobei mindestens 60 Gew.- % des Polymers aus polymerisierten Verbindungen mit mindestens zwei ethylenisch ungesättigten polymerisierbaren Gruppen besteht, die ein ethylenisch ungesättigtes polymerisierbares Gruppenäquivalentgewicht im Bereich von 85 g/äquivalent bis 180 g/äquivalent aufweisen.

5. Polymerpulver nach einem der vorhergehenden Ansprüche, wobei die Teilchen Bruchkanten aufweisen.

6. Polymerpulver nach einem der vorhergehenden Ansprüche, wobei die Oberfläche der Polymerpulverpartikel zumindest teilweise mit einem Tensid bedeckt ist.

7. Verfahren zur Herstellung des duroplastischen Polymerpulvers nach einem der vorhergehenden Ansprüche, umfassend die Schritte
a) Einbringen eines Aufgabematerials, das Verbindungen mit einer oder mehreren ethylenisch ungesättigten polymerisierbaren Gruppen umfasst, in den Einlass eines Reaktors, der einen Einlass, einen Auslass und eine Reaktionszone umfasst, und wobei die Verbindungen mit einer oder mehreren ethylenisch ungesättigten polymerisierbaren Gruppen mindestens eine Verbindung mit mindestens zwei ethylenisch ungesättigten polymerisierbaren Gruppen umfassen,
b) Ausüben einer Scherkraft auf das Material in der Reaktionszone des Reaktors und Veranlassen der ethylenisch ungesättigten polymerisierbaren Gruppen, zu einem duroplastischen Polymer zu polymerisieren, und
c) Zerkleinern des duroplastischen Polymers, um Partikel zu bilden, und Bewegen der duroplastischen Polymerpartikel durch den Auslass des Reaktors.

8. Verfahren nach Anspruch 7, wobei das Verfahren in einem Extruder implementiert ist.

9. Verfahren nach Anspruch 7 oder 8, ferner umfassend den Schritt des Mahlens der Polymerpartikel auf eine gewünschte Teilchengröße.

10. Verfahren nach Anspruch 9, wobei das Mahlen durch Strahlfräsen realisiert wird.

11. Verfahren nach einem der vorhergehenden Ansprüche 7 bis 10, wobei ein radikalerzeugender Initiator in die Reaktionszone eingebracht wird.

12. Verfahren nach einem der vorhergehenden Ansprüche 7 bis 11, ferner umfassend einen Kühlschritt, wobei das duroplastische Polymer nach dem Verlassen des Auslasses des Reaktors abgekühlt wird.

13. Verwendung des duroplastischen Polymerpulvers nach einem der vorhergehenden Ansprüche 1 bis 6 als funktionelles Additiv, wobei die Funktion des Additivs mindestens eine der folgenden Merkmale umfasst: Füllstoff, Modifikator der taktilen Oberflächeneigenschaften, Mattierungsmittel, Trübungsmittel und Verbesserer der mechanischen Eigenschaften.

14. Verwendung nach Anspruch 13, wobei das Polymerpulver als Additiv für Beschichtungszusammensetzungen, organische Polymere oder Materialien auf Zellulosebasis verwendet wird.

## Revendications

1. Poudre de polymère thermodurcissable dont la granulométrie D90 est inférieure ou égale à 60 µm, de préférence inférieure ou égale à 50 µm, déterminée par diffraction laser, dans laquelle le polymère peut être obtenu par polymérisation de composés ayant un ou plusieurs groupes polymérisables éthyléniquement insaturés, et dans laquelle les composés ayant un ou plusieurs groupes polymérisables éthyléniquement insaturés comprennent au moins un composé ayant au moins deux groupes polymérisables éthyléniquement insaturés.

2. Poudre polymère selon la revendication 1, dans laquelle les composés ayant au moins deux groupes polymérisables éthyléniquement insaturés constituent un composé ayant trois groupes polymérisables éthyléniquement insaturés.

3. Poudre polymère selon la revendication 1 ou 2, dans laquelle les composés ayant au moins deux groupes polymérisables éthyléniquement insaturés ont un poids équivalent de groupe polymérisable éthyléniquement insaturé compris dans la gamme de 85 g/équivalent à 180 g/équivalent.

4. La poudre de polymère selon l'une quelconque des revendications précédentes, dans laquelle au moins 60 % en poids du polymère est constitué de composés polymérisés ayant au moins deux groupes polymérisables éthyléniquement insaturés, a un poids équivalent de groupe polymérisable éthyléniquement insaturé compris entre 85 g/équivalent et 180 g/équivalent.

5. La poudre de polymère selon l'une des revendications précédentes, dans laquelle les particules ont des bords de rupture.

6. La poudre de polymère selon l'une des revendications précédentes, dans laquelle la surface des particules de poudre de polymère est au moins partiellement recouverte d'un tensioactif.

7. Procédé de préparation de la poudre de polymère thermodurcissable selon l'une quelconque des revendications précédentes, comprenant les étapes suivantes :
a) Introduire dans l'entrée d'un réacteur comprenant une zone d'entrée, une zone de sortie et une zone de réaction, une matière première comprenant des composés ayant un ou plusieurs groupes polymérisables éthyléniquement insaturés, et dans laquelle les composés ayant un ou plusieurs groupes polymérisables éthyléniquement insaturés comprennent au moins un composé ayant au moins deux groupes polymérisables éthyléniquement insaturés,
b) Exercer une force de cisaillement sur le matériau dans la zone de réaction du réacteur et provoquer la polymérisation des groupes polymérisables éthyléniquement insaturés pour former un polymère thermodurcissable, et
c) Concassage du polymère thermodurcissable pour former des particules et déplacement des particules de polymère thermodurcissable à travers la sortie du réacteur.

8. Procédé selon la revendication 7, dans lequel le procédé est mis en oeuvre dans une extrudeuse.

9. Procédé selon la revendication 7 ou 8, comprenant en outre l'étape de broyage des particules de polymère à une taille de particule souhaitée.

10. Procédé selon la revendication 9, dans lequel le fraisage est mis en oeuvre par broyage à jet.

11. Procédé selon l'une quelconque des revendications 7 à 10 précédentes, dans lequel un initiateur générateur de radicaux est introduit dans la zone de réaction.

12. Procédé selon l'une quelconque des revendications 7 à 11 précédentes, comprenant en outre une étape de refroidissement au cours de laquelle le polymère thermodurcissable est refroidi après avoir quitté la sortie du réacteur.

13. Utilisation de la poudre de polymère thermodurcissable selon l'une quelconque des revendications 1 à 6 précédentes en tant qu'additif fonctionnel, dans lequel la fonction de l'additif comprend au moins une des fonctions suivantes : agent de remplissage, modificateur des propriétés de surface tactile, agent matifiant, agent opacifiant et améliorant les propriétés mécaniques.

14. Utilisation selon la revendication 13, dans laquelle la poudre de polymère est utilisée comme additif pour des compositions de revêtement, des polymères organiques ou des matériaux à base de cellulose.
